# EUROPEAN PATENT APPLICATION

(11) **EP 1 157 777 A2**
(43) Date of publication of application: **28.11.2001**
(21) Application number: 01104020.1
(22) Date of filing: 20.02.2001
(51) Int. Cl.: B23Q 1/54

(54) **Operating head for automatic machine tools**

(30) Priority: 25.05.2000 CH 105800
(71) Applicant: Colombo, Mauro, 6877 Coldrerio Ticino (CH)
(72) Inventor: Colombo, Mauro, 6877 Coldrerio Ticino (CH)
(74) Representative: La Ciura, Salvatore

(57) **Abstract**

Operating head for machine tools characterised in that it comprises:
- a first support to be mounted on a machine tool
- a second support mounted on the said first support in such a way that it can rotate around a first axis
- a tool holder mounted in a cavity present in the said second support in such a way that it can rotate around a second axis that does not coincide with the said first axis, in particular an axis orthogonal to the said arms which lies on the same plane as the said first axis.

This solution offers various advantages, including an operating head which is much simpler to manufacture and therefore cheaper than known types, as well as a considerable simplification of the machine control software.

## Description

This invention relates to an operating head for automatic machine tools which comprises a support, in particular a fork-shaped support, between the arms of which is mounted a tool such as a chuck, a motorised chuck, a laser or the like, which is able to move along a pair of orthogonal axes of rotation.

In particular, the tool is mounted on a cross-shaped support in such a way that the pivot point coincides with the centre of an imaginary sphere inside the fork support, on the surface of which the tip of the tool moves.

This solution offers various advantages, including an operating head which is much simpler to manufacture and therefore cheaper than known types, considerable simplification of the machine control software, as there is no need for the calculations to take account of the distance between axes A and C, which coincide in the case of the invention, and above all a more rigid assembly, because the moments transferred to the support by the tool are eliminated.

The invention falls into the sector of automatic machine tools used to perform various tasks, such as machining or assembly work, especially in the aeronautical industry.

The machine tools in this category, which are able to move and position a tool along a number of axes (up to 8 axes in the most advanced machines), comprise a mobile support on which an operating head with at least two degrees of freedom is mounted, which said operating head holds a tool that may be a chuck, a motorised chuck, a feeler or the like.

The head support, which may be a sleeve or other known device, usually moves along a set of three orthogonal axes, and the head is mounted in this sleeve in such a way that it can rotate around the sleeve axis.

The head comprises a body which is usually the fork type, on which the support of a chuck or motorised chuck moves around an axis of rotation.

Operating heads of this kind are described, for example, in US patents nos. 5,385,436, 5,286,146, 4,652,190, 5,257,883, 5,056,971 and 4,652,190.

However, although all these known solutions offer good performance, they are complicated to manufacture, and the lengthy production and assembly times involved lead to an increase in costs.

Moreover, programming these machines is by no means simple because the pivot point, namely the centre of rotation around which the tool rotates during its various movements, does not coincide with the axes of rotation of the head, with the result that account must be taken of the corresponding distances when the tool routes are calculated.

The control system is therefore extremely complicated, and offers possibilities of movement which are unnecessary for many applications.

In the aeronautical industry in particular, for the machining of aircraft parts it would be preferable to have machines which are easier to control and above all which allow the tool to be replaced quickly and easily, thus reducing machine stoppage times, which currently have adverse effects on the production cycle.

This and other purposes are achieved by the operating head in accordance with the invention, which comprises a fork that remains fixed during machining; the tool-holding chuck (or laser or the like) is fitted to a cross support mounted on the fork. In particular, a support with an internal cavity in which the tool is fitted is mounted between the arms of the fork in such a way that it can rotate from ± 45° to ± 180°, depending on the type of drive; the tool can perform rotations of approximately ± 45° around an axis orthogonal to the axis of rotation of the said main support, and on the same plane.

This system greatly simplifies the manufacture of the machine, and facilitates the management and writing of the control programs.

This invention will now be described in detail, by way of example but not of limitation, by reference to the annexed figures in which:

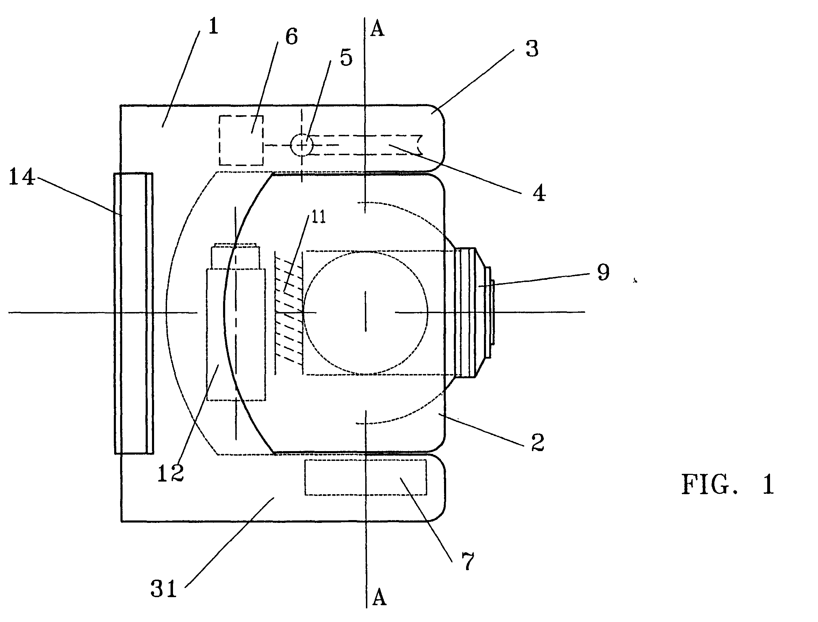

- figure 1 is a view of the head to which the invention relates, in accordance with a first direction
- figure 2 is a view of the head in accordance with a direction orthogonal to the one shown in figure 1
- figure 3 is a front view of the head, in accordance with an axis orthogonal to the plane of the two preceding axes
- figures 4 to 7 are views of different embodiments of the invention, showing some of the internal mechanisms.

With reference to the annexed figures, the operating head in accordance with the invention comprises a first support indicated as 1, preferably the fork type, although it could also be a different type, between the arms of which is fitted a second support indicated as 2, which can rotate around a first axis A-A in relation to assembly 1.

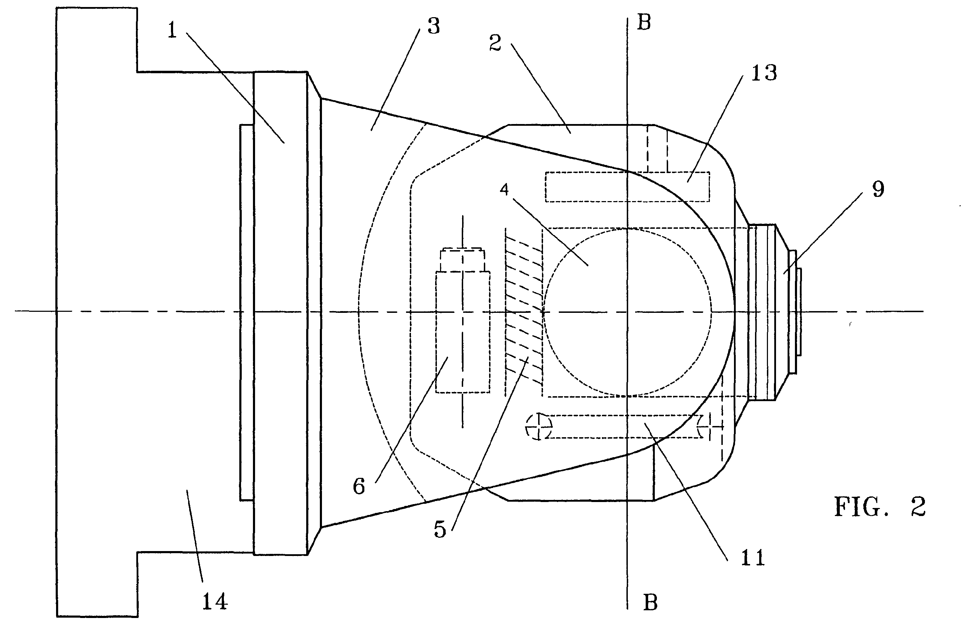

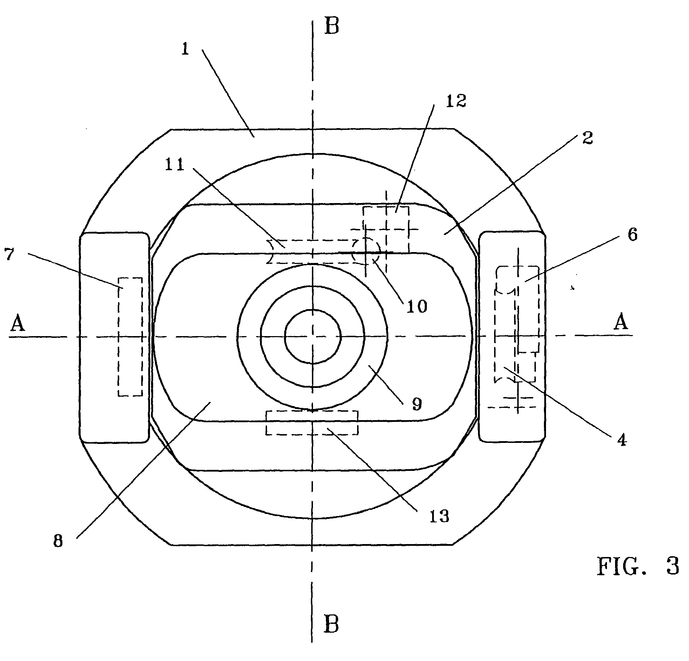

Various methods can be used to rotate support 2. For example, a worm gear consisting of worm wheel 4 and worm 5, driven by a motor 6 positioned in one of the arms of the fork, could be used, as illustrated in figures 2 and 3.

On the opposite side a transducer such as an encoder, shown as 7, precisely indicates the rotation of the support, which can rotate around axis A-A by an amount preferably not less than 180°, such as an angle of approximately 220°.

A cavity 8 is made in the body of support 2, and a tool assembly 9, such as a motorised chuck, which can rotate around an axis B-B orthogonal to the preceding axis (see figure 3) by an angle of approximately ± 45°, is fitted in the said cavity.

Here again, the rotations of the chuck will be actuated by a worm gear, consisting of a worm 10 and a ring gear 11, driven by a motor 12, and will be controlled by an encoder 13.

Number 14 in the figures indicates the structure of the machine, which may be a sleeve or the like, to which support 1 is fixed.

During the operation of the machine the head is moved to the point of operation, then the tool is correctly positioned by rotating the support around axis A and chuck assembly 9 around axis B; encoders 7 and 13 will supply the information required for correct positioning of the tool to the control unit.

The tool may be of any suitable type; for example, in the most common case it would consist of a chuck or motorised chuck, or it could be a laser unit for cutting and/or welding or heat treatment operations, a feeler for detection operations, and so on.

During all these movements, the pivot point will coincide with the point of intersection of axes A and B, and the tool will move on a spherical sector centred on this pivot point.

This means that once the workpiece has been fitted, different jobs can be performed simply by replacing the chuck, and not the whole head as in the case of the known technique.

This characteristic also greatly simplifies programming of the machine.

Alternatively, in accordance with a cheaper and simpler solution, an articulated arm could be built into one of the pins of support 2, and driven by a ball screw or the like, or epicyclic reduction gear could be installed.

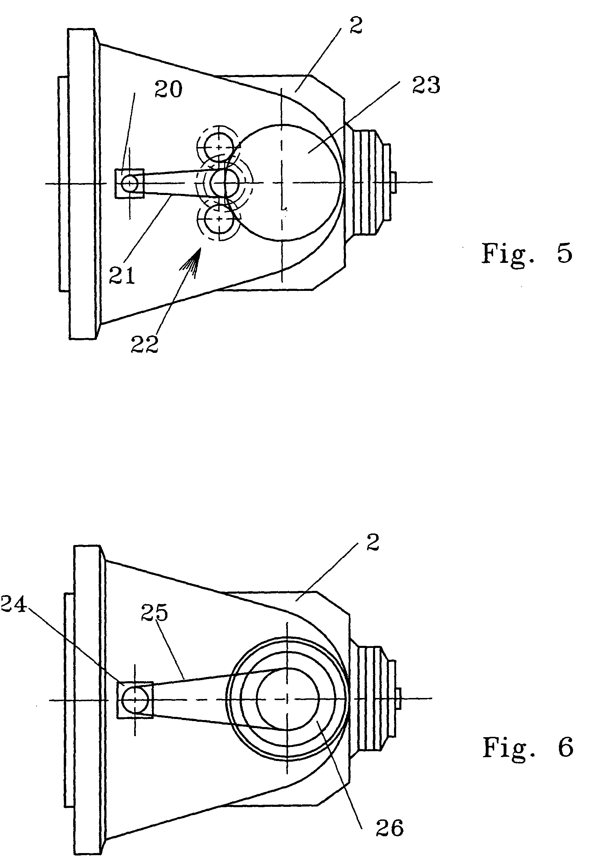

In accordance with an alternative embodiment of the invention, with a cheaper and simpler solution illustrated in figure 4, the rotations of support 2 could be controlled by a lever 15, integral with one of the pins of support 2, driven via a connecting rod 16 by a mechanism comprising a threaded shaft 18 and a volute 18, driven by a motor 19.

According to a further preferred embodiment of the invention, the rotations of support 2 could be actuated by a motor 20 which, via a belt 21 or the like, activates an epicyclic reduction gear mechanism indicated as 22, which in turn transmits motion to a cogwheel 23 integral with support 2.

This embodiment is illustrated in figure 5.

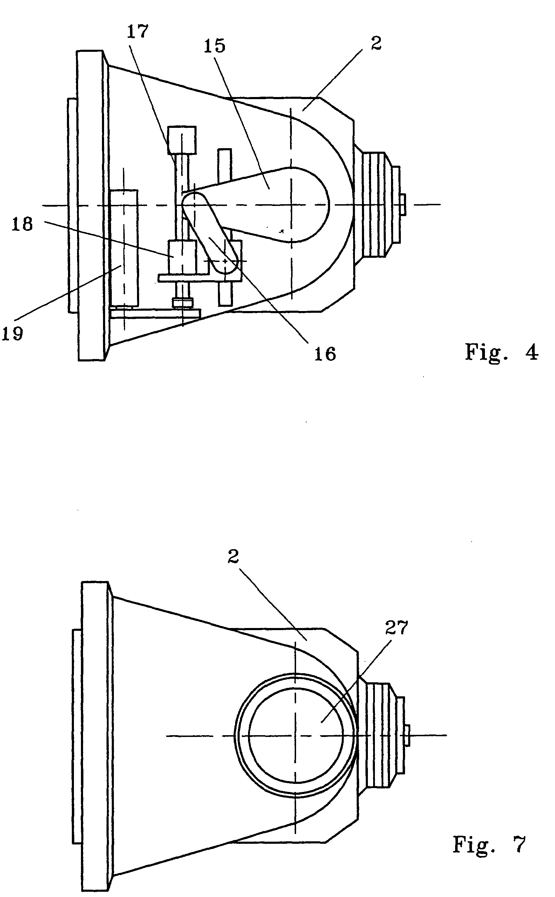

Alternatively, according to a further preferred embodiment of the invention, illustrated in figures 6 and 7, a motor 24 could control the rotations of the support, transmitting motion via a belt 25 to reduction gear 26 of known type or, in the case of motors able to rotate at very low speed, with control of the amplitude of rotation, a motor 27 could be fitted directly to the shaft of support 2.

An expert in the field could devise numerous modifications and variations, all of which should be deemed to fall within the scope of this invention.

## Claims

1. Operating head for machine tools **characterised in that** it comprises:
• a first support to be mounted on a machine tool
• a second support mounted on the said first support in such a way that it can rotate around a first axis
• a tool holder mounted in a cavity present in the said second support in such a way that it can rotate around a second axis that does not coincide with the said first axis.

2. Operating head as claimed in claim 1, **characterised in that** the said first support is a fork support and the said second support is mounted between the arms of the said fork in such a way that it can rotate around an axis orthogonal to the said arms which lies on the same plane as the said first axis.

3. Operating head as claimed in claim 1 or 2, **characterised in that** the said second support and the said tool assembly form a cross-shaped element mounted on the said first support.

4. Operating head as claimed in claim 3, in which the said tool is a chuck.

5. Operating head as claimed in claim 3, in which the said tool is a motorised chuck.

6. Operating head as claimed in claim 3, in which the said tool is a laser.

7. Operating head as claimed each of the preceding claims, **characterised in that** the said tool assembly is mounted in a cavity present in the said second support.

8. Operating head as claimed in each of the preceding claims, **characterised in that** a device constituted by a linkage activated by a ball screw is fitted to control the rotation of the said second support and/or the said tool assembly.

9. Operating head as claimed in each of claims 1 to 7, **characterised in that** a worm gear mechanism is fitted to control the rotation of the said second support and/or the said tool assembly.

10. Operating head as claimed in each of claims 1 to 7, **characterised in that** an epicyclic reduction gear mechanism is fitted to control the rotation of the said second support and/or the said tool assembly.

11. Operating head as claimed in each of claims 1 to 7, **characterised in that** a motor is fitted directly on the shaft of the second support to control the rotation of the said second support and/or the said tool assembly.

12. Operating head as claimed in each of the preceding claims, **characterised in that** the said second support can rotate around the said first axis by at least 180°.

13. Operating head as claimed in the preceding claim, **characterised in that** the said tool assembly can rotate around the said second axis by at least plus or minus 45°.
